# EUROPEAN PATENT APPLICATION

(11) **EP 3 062 235 A2**
(43) Date of publication of application: **31.08.2016**
(21) Application number: 16155367.2
(22) Date of filing: 11.02.2016
(51) Int. Cl.: G06F 17/18

(54) **WORST-CASE EXECUTION TIME STATISTICAL TOOL**

(30) Priority: 23.02.2015 US 201514628990
(71) Applicant: Honeywell International Inc., Morris Plains, NJ 07950 (US)
(72) Inventor: ZAYKOV, Pavel, Morris Plains, NJ 07950 (US); SMID, Jiri, Morris Plains, NJ 07950 (US); KUBALCIK, Jan, Morris Plains, NJ 07950 (US)
(74) Representative: Houghton, Mark Phillip

(57) **Abstract**

One embodiment is directed towards a method for determining a worst-case execution time (WCET) with a desired probability of exceedance. The method includes estimating distribution function parameters for an M set of execution times for each of a Gumbel, Fréchet, and Weibull extreme value theory (EVT) distribution functions. The method can determine whether the M set of execution times fits any of the EVT distribution functions. For each of the EVT distribution functions that fits the M set of execution times, a minimum number of execution times can be calculated. For each of the EVT distribution functions that fits the M set of execution times and in which the M set of execution times has at least as many execution times as the minimum number of execution times, a WCET can be calculated for the M set of execution times to the desired probability of exceedance.

## Description

### BACKGROUND

Determining a worst-case execution time (WCET) for an application executed on a system is desirable. For example, a WCET guaranteed with a certain probability of exceedance is used when certifying a system for use in an aerospace environment.The existing WCET tools, however, may not have sufficient certification arguments to determine an accurate WCET for a system including a multicore processor. Accordingly, there is a necessity in the existing state of the art for a WCET tool that can provide an accurate WCET guaranteed with a certain probability of exceedance for an application executed on a system including a multicore processor.

### SUMMARY

One embodiment is directed towardsa method for determining a worst-case execution time (WCET) with a desired probability of exceedance for an application executed on a system. The method includes extracting a longest execution time from each of a plurality of blocks of execution timesto form an M set of execution times, each execution time corresponding to a length of time in which the application is executed on the system. Distribution function parameters for the M set of execution times can be estimated for each of a Gumbel, Fréchet, and Weibull extreme value theory (EVT) distribution functions. The method can determine whether the M set of execution times fits any of the EVT distribution functions based on the distribution function parameters for the respective EVT distribution and at least one goodness of fit (GOF) test. For each of the EVT distribution functions that fits the M set of execution times, a minimum number of execution times can be calculated to determine the WCET using the respective EVT distribution function based on the desired probability of exceedance. The method can compare each minimum number of execution times with a number of execution times in the M set of execution times. For each of the EVT distribution functions that fits the M set of execution times and in which the M set of execution times has at least as many execution times as the minimum number of execution times for the respective EVT distribution function, a WCET can be calculated for the M set of execution times to the desired probability of exceedance.

### DRAWINGS

The following exemplary figures are intended to aid the understanding of the written description of the exemplary embodiments and should not be considered limiting in scope.
Figure 1 is a diagram of an example application of a worst-case execution time (WCET) statistical tool.
Figure 2 is a flow diagram of an example method of determining a WCET with a desired probability of exceedance for an application executed on a system.
Figure 3 is a block diagram of an example apparatus for implementing the WCET tool of Figure 1 and the method of Figure 2.

In accordance with common practice, the various displayed features are not necessarily drawn to scale but are drawn to emphasize specific features relevant to the exemplary embodiments.

### DETAILED DESCRIPTION

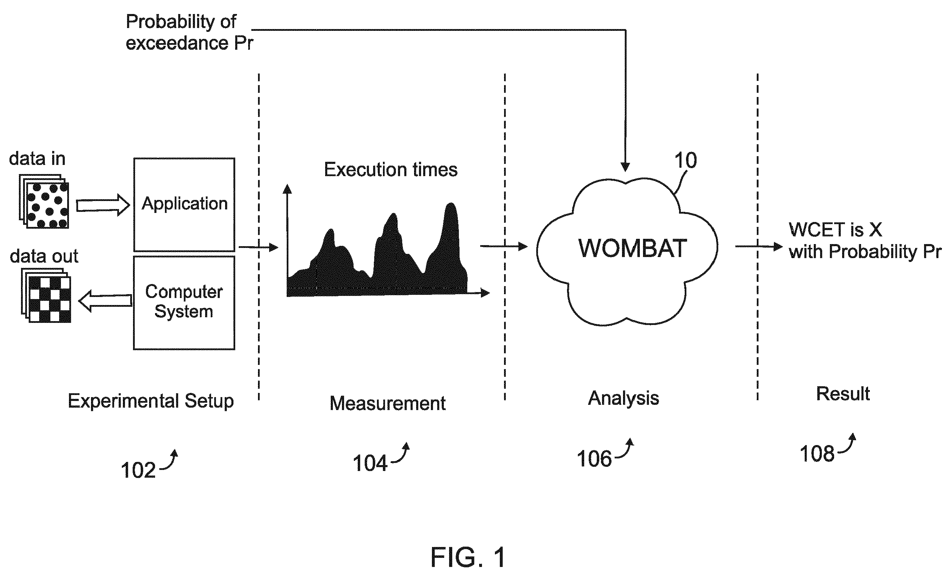

Figure 1 is a diagram of an example application of a worst-cast execution time (WCET) statistical tool 10. Initially, an experiment is run 102 with an application executing on a system, wherein it is desired to determine a WCET for that application on that system or to bound the worst-case interferences on shared resources. The experiment provides the system and application with input data and measures a length of time in which the application executes on the system to provide output data based on that input data. The length of time in which the application executes on the system to provide output data based on a given set of input data is referred to herein as an execution time for the application on that system. The experiment repeatedly provides the application with input data and measures corresponding execution times for the application on that system 104. Methods of running experiments on an application and system to obtain a plurality of execution times are known to those skilled in the art. The plurality of execution times can be obtained in blocks as known to those skilled in the art.

Once a plurality of blocks of execution times are obtained, the blocks can be input into the WCET tool 10 along with a desired probability of exceedance 106. The desired probability of exceedance is the probability in which the WCET provided by the WCET tool 10 will be exceeded. The probability of exceedance can be selected by the user and is input into the WCET tool 10 along with the blocks of execution times. If the blocks of execution times meet certain criteria tested by the WCET tool 10, the WCET tool 10 will output a WCET time for the application executed on a particular system within the desired probability of exceedance 108.

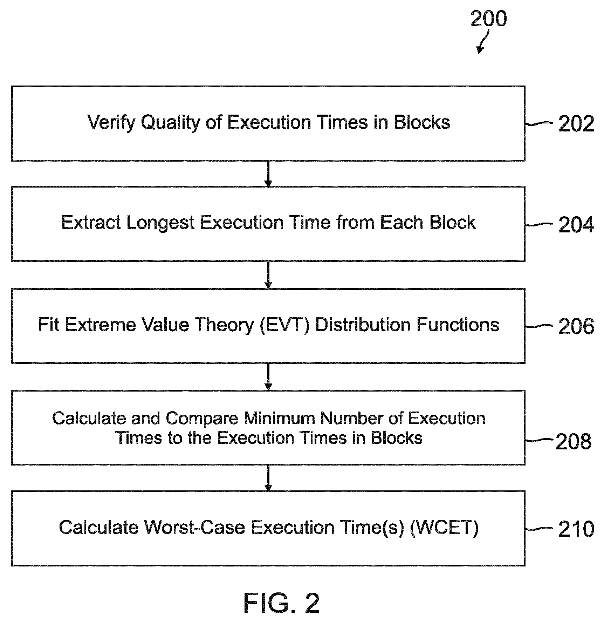

Figure 2 is a flow diagram illustrating a method 200 of determining a WCET with the WCET tool 10. In some examples, the WCET tool 10 can verify whether the quality of the data in the plurality of blocks of execution times is sufficient to accurately estimate a WCET (block 202). Verifying whether the quality of data is sufficient can include one or both of verifying whether the execution times in the plurality of blocks are identically distributed and verifying whether the execution times in the plurality of blocks are sufficiently independent (i.e., independent or limited dependency).

In an example, verifying whether the execution times in the plurality of blocks are identically distributed includes comparing whether the i-th histograms for the i-th blocksbelong to the same distribution. This can be done by creating a plurality of histograms for the plurality of blocks, calculating a chi-squared statistic for the plurality of blocks, and calculating critical values for the plurality of blocks. A plurality of histograms can be created by sorting the observations in each block, and creating a histogram for each block, where each histogram bin has at least a few execution times. The size of the bins may be non-equidistant. If there is no other possibility except a single histogram bin for a block, the WCET tool 10 can determine that the execution times in the plurality of blocks are not identically distributed.Once the histograms are created, a chi-squared statistic can be calculated based on the histograms. The critical values can also be calculated as an inverse cumulative distribution function of chi-squared, with a degree of freedom equal to [(the number of blocks minus 1)(the number of bins minus 1)], and a widely accepted significance level (e.g., a significance level in the range of 0.01 to 0.10).If the chi-squared statistic is less than or equal to each of the critical values, the WCET tool 10 can determine that the plurality of blocks are identically distributed. If the chi-squared statistic is greater than one or more of the critical values, the WCET tool 10 can determine that the plurality of blocks are not identically distributed.In other examples, other methods of verifying whether the execution times are identically distributed can be used, including variations of the above.

If the WCET tool 10 determines that the execution times in the plurality of blocks are identically distributed, the WCET tool 10 can continue processing the execution times toward determining a WCET. If the WCET tool 10 determines that the execution times in the plurality of blocks are not identically distributed, the WCET tool 10 can provide an indication to a user that any WCET calculated based on this plurality of blocks of execution times may be in error. Such an indication can be provided by, among other things, aborting the process of determining a WCET based on this plurality of blocks of execution times.

As mentioned above, instead of, or in addition to verifying whether the execution times are identically distributed, the WCET tool 10 can verify whether the execution times in the plurality of blocks are sufficiently independent. In an example, verifying whether the execution times are sufficiently independent includes applying an autocorrelation test to identify any dependencies in the execution times. Such an autocorrelation test can include calculating an autocorrelation coefficient for each lag k, where lag k is the distance between compared values, and lag k varies from 0 to the number of execution times in the plurality of blocks minus 1. The critical interval can then be calculated. If all the autocorrelation coefficients (except k = 0) are within the critical interval, the WCET tool 10 can determine that there are no dependencies and, therefore, that the execution times are sufficiently independent. If any of the autocorrelation coefficients are outside of the critical interval, the WCET tool 10 can determine that there are some dependencies and can further analyze the execution times to verify whether the dependencies are boundable by the autocorrelation test and whether the execution times in the plurality of blocks are stationary. That is, the execution times can be further analyzed to verify that there are no significant trends.

The WCET tool 10 can verify whether the dependencies within a block are bounded by applying the autocorrelation test to determine whether the execution times can be considered independent with a widely accepted significance level (e.g., a significance level in the range of 0.01 to 0.10). This can be done by searching for a minimum k for which the autocorrelation coefficient in the i-th block is in the autocorrelation critical interval. For each block, the WCET tool 10 can determine which autocorrelation coefficients with an index greater than the minimum k belong to the critical interval. For example, if more than 5% (based on the significance level of 0.05) of the autocorrelation coefficients for any of the blocks are outside the critical interval, the WCET tool 10 determines that the dependencies are not sufficiently bounded and, therefore, that the execution times are not sufficiently independent. For example, if less than 5% of the autocorrelation coefficients for all of the blocks are outside the critical interval, the WCET tool 10 can further analyze the execution times to determine whether the execution times are stationary.

For the test of stationarity, the WCET tool 10 can verify whether a linear model is appropriate to present a data within a block. This can be done by verifying whether a residual in a given block resembles a normal distribution with *µ*=0 and *σᵢ.* The residual for each block can be calculated by applying a linear regression method such as least squares. The standard deviation, *σᵢ*, is calculated on the residuals of each block. The chi-squared goodness of fit test can then be applied per block to verify whether the residuals are normally distributed within N(0,*σᵢ*). The WCET tool 10 can then verify whether the residuals are independent using, for example, the autocorrelation test of independency discussed above. If the residuals are not both independent and N(0,*σᵢ*), the WCET tool 10 determines that the execution times are not stationary and, therefore, that the execution times are not sufficiently independent.If the residuals are determined to be independent and N(0,*σᵢ*), the execution times in a block can be presented by linear regression, and the WCET tool 10 can continue analyzing the execution times to verify whether they are stationary. To continue analyzing the execution times, the WCET tool 10 can calculate a stationarity statistic (e.g., a t-statistic for the Student's distribution) for each block. The WCET tool 10 can also calculate a critical value by applying Student's distribution with degree of freedom equal to the number of execution times in the plurality of blocks minus two and a widely acceptedsignificance level (e.g., a significance level in the range of 0.01 to 0.10). If the stationarity statistic for each block is less than or equal to the critical value, the WCET tool 10 determines that the execution times are stationary and, therefore, that the execution times are sufficiently bounded and are sufficiently independent. If one or more of the stationarity statistics are greater than the critical value, the WCET tool 10 determines that the execution times are not stationary and, therefore, that the execution times are not sufficiently bounded and are not sufficiently independent.

If the WCET tool 10 determines that the execution times in the plurality of blocks are sufficiently independent, the WCET tool 10 can continue processing the execution times toward determining a WCET. If the WCET tool 10 determines that the execution times in the plurality of blocks are not sufficiently independent, the WCET tool 10 can provide an indication to a user that any WCET calculated based on this plurality of blocks of execution times may be in error. Such an indication can be provided by, among other things, aborting the process of determining a WCET based on this plurality of blocks of execution times.

Regardless of any data quality analysis performed, the WCET tool 10 can calculate a WCET by extracting the longest execution time from each of the plurality of blocks of execution times to form anM set of execution times (block 204 of Figure 2). Then, the WCET tool 10 can estimate distribution function parameters for the M set of execution times for each of the Gumbel, Fréchet, and Weibull extreme value theory (EVT) distribution functions (also referred to herein as simply the "three EVT distribution functions"). That is, three sets of distribution function parameters are estimated, one set for the Gumbel EVT distribution function, one set for the Fréchet distribution function, and one set for the Weibull distribution function. In an example, the reverse Weibull distribution function is used as the Weibull EVT function. In an example, the distribution function parameters for each of the three EVT distribution functions can be estimated by using the maximum likelihood estimation (MLE) method.

The WCET tool 10 can then determine whether the M set of execution times fits any of the three EVT distribution functions (block 206). Since the M set of execution times may fit more than one of the three EVT distribution functions, in an example, the WCET tool 10 checks the M set of execution times against each of the three EVT distribution functions. In such an example, the WCET tool 10 may identify a fit with one, two, or all three of the EVT distribution functions. The fit with each of the three EVT distribution functions can be determined based on the distribution function parameters estimated for the respective EVT distribution function and based on one or more goodness of fit (GOF) tests using the M set of execution times. That is, the determination of whether the M set of execution times fits the Gumbel EVT distribution function can be based on the distribution function parameters estimated for the Gumbel EVT distribution function and one or more goodness of fit tests for the M set of execution times with respect to the Gumbel EVT distribution function. Similarly, the determination of whether the M set of execution times fits the Fréchet EVT distribution function can be based on the distribution function parameters estimated for the Fréchet EVT distribution function and one or more goodness of fit tests for the M set of execution times with respect to the Fréchet EVT distribution function. Finally, the determination of whether the M set of execution times fits the Weibull EVT distribution function can be based on the distribution function parameters estimated for the Weibull EVT distribution function and one or more goodness of fit tests for the M set of execution times with respect to the Weibull EVT distribution function.

In an example, the one or more goodness of fit tests applied to determine whether the M set of execution times fits a particular EVT distribution function, include applying multiple goodness of fit (GOF) tests. If all of the goodness of fit (GOF) tests indicate a sufficient fit for a particular EVT distribution function, the WCET tool 10 determines that the M set of execution times fits that EVT distribution function. If one or more of the multiple goodness of fit tests indicate that the M set of execution times does not fit a particular EVT distribution function, the WCET tool 10 determines that the M set of execution times does not fit that particular EVT distribution function. As discussed above, the fit determination is performed separately for each of the three EVT distribution functions. Thus, if the M set of execution times does not fit a first of the three EVT distribution functions, the M set of execution times is still checked for a fit with second and/or a third of the EVT distribution functions.Likewise, even if a fit is found between the M set of execution times and a particular EVT distribution function, the M set of execution times is still checked for a fit with second and/or a third of the EVT distribution functions. In an example, applying multiple GOF tests includes applying both the Kolmogorov-Smimov GOF test and the Chi-squared GOF test. A significance level of 0.05 can be used for both of the GOF tests.

If a fit is identified for one or more of the three EVT distribution functions, the WCET tool 10 can continue processing the M set of execution times toward determining a WCET. If, however, a fit is not identified for any of the three EVT distribution functions, the WCET tool 10 is not able to determine a WCET for the M set of execution times and aborts the process with respect to that M set of execution times. In some examples, the WCET tool 10 attempts to generate an updated plurality of blocks which can be used to determine a WCET. In an example, the updated plurality of blocks can be created if the number of blocks in the (current) plurality of blocks is greater than or equal to a threshold. In such an example, if the number of blocks in the (current) plurality of blocks is less than the threshold, the WCETdoes not create an updated plurality of blocks. If, however, the number of blocks is greater than or equal to the threshold, the WCET tool 10 divides the (current) plurality of blocks into pairs of adjacent blocks, and then merges each pair of blocks into a single block. This merging results in an updated plurality of blocks having half as many blocks as the original plurality of blocks, and where each block includes twice as many execution times. The method 200 for determining a WCET can then be restarted with this updated plurality of blocks to attempt to determine a WCET based thereon.

In examples where a fit is identified for one or more of the three EVT distribution functions, the WCET tool 10 can calculate a minimum number of execution times (block 208) for each of the three EVT distribution functions that passed the GOF test. The minimum number of execution times is based on the desired probability of exceedance, which is input into the WCET tool 10. In an example, the minimum number of execution times for a particular EVT distribution function is calculated as a natural logarithm function of the desired probability of exceedance divided by a natural logarithm function of a result of the particular EVT distribution function of a longest execution time in the M set of execution times. This is shown in equation form as: N1= ln *pr*/ In *F(Xmax),* where N1 is the minimum number of execution times, *pr* is the desired probability of exceedance *F()* is the particular EVT cumulative distribution function, and *Xmax* is the longest execution time in the M set of execution times. Futhermore, N1 can be adjusted by truncating a small number of the longest execution times. As discussed above, if multiple EVT distribution functions are identified as a match, a respective minimum number of execution time calculation is performed for each of the multiple EVT distribution functions to determine a respective minimum number of execution times for each of the multiple EVT distribution functions.

If the M set of execution times does not have at least the minimum number of execution times for any of the EVT distribution functions that fit the M set of execution times, the WCET tool 10 can provide an indication to a user that any WCET calculated based on this plurality of blocks of execution times may be in error. Such an indication can be provided by, among other things, aborting the process of determining a WCET based on this plurality of blocks of execution times. In some examples, if the M set of execution times does not have at least the minimum number of execution times for any of the EVT distribution functions that fit the M set of execution times, the WCET tool 10 can decrease the probability of exceedance to a value in which the set of execution times has at least the corresponding minimum number of execution times for at least one of the EVT distribution functions that fits the M set of execution times. The WCET tool 10 can then continue processing to determine a WCET based on the plurality of blocks of execution times, and can provide an indication (e.g., to a user) that the probability of exceedance has been adjusted to accurately determine a WCET and can provide the adjusted value for the probability of exceedance.

If the M set of execution times does have at least the minimum number of execution times for one or more EVT distribution functions that fit the M set of execution times, the WCET tool 10 can calculate a WCET for those one or more EVT distribution functions (block 210). The WCET can be calculated as an inverse function of the respective EVT distribution function at a percentile corresponding to the desired probability of exceedance. As discussed above, since multiple EVT distribution functions may match the M set of execution times and have the minimum of number of execution times met, the WCET tool 10 may calculate multiple WCETs, one for each EVT distribution function fitting the M set of execution times and for which the minimum number of execution times is met. In situations where multiple WCETs are calculated, the WCET tool 10 can, for example, select from the multiple WCETs, the WCET having the longest time value as the WCET to output. In any case, the WCET tool 10 can output (e.g., to a user) a WCET for the plurality of blocks.

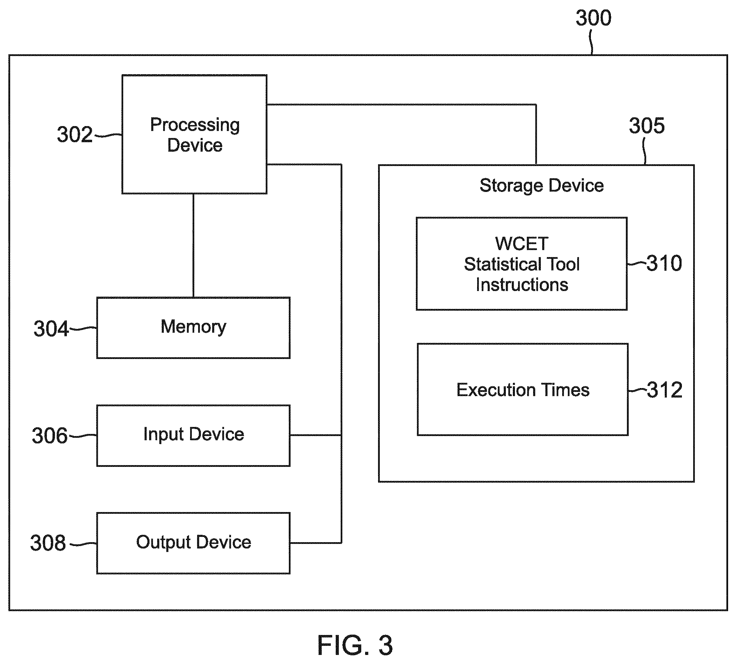

Figure 3 is a block diagram of an example apparatus 300 for execution of the WCET tool 10. The apparatus 300 can include one or more processing devices 302 (e.g., a central processing unit (CPU), microcontroller, microprocessor, etc.) coupled to one or more memory devices 304 (e.g., random access memory (RAM)). One or more data storage devices 305 (e.g., a hard disk drive, a solid state drive, an optical medium (CD), etc.) can also be coupled to the one or more processing devices 302. The one or more data storage devices 305 can include instructions 310 which, when executed by the one or more processing devices 302, can cause the one or more processing devices 302 to perform the functions of the WCET tool 10 as described herein. The plurality of execution times 312 operated on by the instructions 310 can also be stored in the one or more data storage devices 305.

Separate from and/or in addition to,the one or more data storage devices 305, the instructions 310 can be stored on any appropriate processor readable medium used for storage of processor readable instructions or data structures. The processor readable medium can be implemented as any available media that can be accessed by a general purpose or special purpose computer or processor, or any programmable logic device. Suitable processor-readable media can include tangible media such as magnetic or optical media. For example, tangible media can include conventional hard disks, Compact Disk - Read Only Memory (CD-ROM), volatile or non-volatile media such as Random Access Memory (RAM) (including, but not limited to, Synchronous Dynamic Random Access Memory (SDRAM), Double Data Rate (DDR) RAM, RAMBUS Dynamic RAM (RDRAM), Static RAM (SRAM), etc.), Read Only Memory (ROM), Electrically Erasable Programmable ROM (EEPROM), and flash memory, etc. Suitable processor-readable media can also include transmission media such as electrical, electromagnetic, or digital signals, conveyed via a communication medium such as a network and/or a wireless link.

In an example, the apparatus 300 can include one or more input devices 306 (e.g., a mouse, keyboard, touchscreen, microphone, etc.) for receiving inputs from a user. The apparatus 300 can also include one or more output devices 308 (e.g., a monitor, speaker, light, etc.) for providing output to a user. The apparatus 300 can comprise a personal computer such as a desktop computer, workstation, laptop, tablet, mobile phone, or other computing device. In some examples, the apparatus 300 can be a computer that is distributed in nature.

### EXAMPLE EMBODIMENTS

Example 1 includes a method for determining a worst-case execution time (WCET) with a desired probability of exceedance for an application executed on a system, the method comprising: extracting a longest execution time from each of a plurality of blocks of execution timesto form an M set of execution times, each execution time corresponding to a length of time in which the application is executed on the system; estimating distribution function parameters for the M set of execution times for each of a Gumbel, Fréchet, and Weibull extreme value theory (EVT) distribution functions; determining whether the M set of execution times fits any of the EVT distribution functions based on the distribution function parameters for the respective EVT distribution and at least one goodness of fit test; for each of the EVT distribution functions that fits the M set of execution times, calculating a minimum number of execution times to determine the WCET using the respective EVT distribution function based on the desired probability of exceedance; comparing each minimum number of execution times with a number of execution times in the M set of execution times; and for each of the EVT distribution functions that fits the M set of execution times and in which the M set of execution times has at least as many execution times as the minimum number of execution times for the respective EVT distribution function, calculating a WCET for the M set of execution times to the desired probability of exceedance.

Example 2 includes the method of Example 1, comprising: verifying whether the execution times in the plurality of blocks are identically distributed; and indicating that any WCET based on the plurality of blocks may be in error if the execution times in the plurality of blocks are not identically distributed.

Example 3 includes the method of Example 2, wherein verifying whether the execution times in the plurality of blocks are identically distributed includes: creating a plurality of histograms for the plurality of blocks; calculating a chi-squared statistic for the plurality of blocks; calculating critical values for the plurality of blocks; if the chi-squared statistic is less than or equal to each of the critical values, determining that the plurality of blocks are identically distributed; and if the chi-squared statistic is greater than one or more of the critical values, determining that the plurality of blocks are not identically distributed.

Example 4 includes the method of any of Examples 1-3, comprising: verifying whether the execution times in the plurality of blocks are sufficiently independent; and indicating that any WCET based on the plurality of blocks may be in error if the execution times in the plurality of blocks are not sufficiently independent.

Example 5 includes the method of Example 4, wherein verifying whether the execution times in the plurality of blocks are independent includes: applying an autocorrelation test to the execution times in the plurality of blocks; if the autocorrelation test indicates that the execution times in the plurality of blocks have no dependencies, determining that the plurality of blocks are sufficiently independent; if the autocorrelation test indicates that the execution times in the plurality of blocks have some dependencies, verifying whether the dependencies are boundable by the autocorrelation test and whether the execution times in the plurality of blocks are stationary; if the dependencies are boundable and the execution times in the plurality of blocks are stationary, determining that the plurality of blocks are sufficiently independent; and if the dependencies are not boundable or the execution times in the plurality of blocks are not stationary, determining that the plurality of blocks are not sufficiently independent.

Example 6 includes the method of any of Examples 1-5, wherein estimating distribution function parameters includes applying a maximum likelihood method.

Example 7 includes the method of any of Examples 1-6, wherein the at least one goodness of fit test includes a Kolmogorov-Smirnov goodness of fit test and a chi-squared goodness of fit test with a significance level in the range of 0.01 to 0.10.

Example 8 includes the method of any of Examples 1-7, comprising: if the M set of execution times does not fit any of the EVT distribution functions and a number of blocks in the plurality of blocks is greater than or equal to a threshold, dividing the plurality of blocks into pairs of adjacent blocks; merging the pairs of adjacent blocks to form an updated plurality of blocks; and restarting the method with the updated plurality of blocks.

Example 9 includes the method of Example 8, if the M set of execution times does not fit any of the EVT distribution functions and a number of blocks in the plurality of blocks is less than the threshold, aborting the computation of the WCET from the plurality of blocks.

Example 10 includes the method of any of Examples 1-9, wherein calculating a minimum number of execution times includes calculating the minimum number of execution times as a natural logarithm function of the desired probability of exceedance divided by a natural logarithm function of a result of the respective EVT distribution function of a longest execution time in the M set of execution times.

Example 11 includes the method of any of Examples 1-10, comprising: if the M set of execution times fits one or more of the EVT distribution functions, but has less than the minimum number of execution times for each of the one or more of the EVT distribution functions, decreasing the desired probability of exceedance to a value in which the M set of execution times has at least the minimum number of execution times for the one or more EVT distribution functions; and calculating the WCET for the M set of execution times to the decreased desired probability of exceedance.

Example 12 includes the method of any of Examples 1-11, comprising: if multiple WCET are calculated, selecting from the multiple WCET, a WCET having the longest time value as a WCET to output for the plurality of blocks.

Example 13 includes the method of any of Examples 1-12, wherein calculating the WCET for the M set of execution times includes calculating the WCET as an inverse function of the respective EVT distribution function at a percentile corresponding to the decreased desired probability of exceedance.

Example 14 includes an apparatus for determining a worst-case execution time (WCET) with a desired probability of exceedance for an application executed on a system, the apparatus comprising: one or more processing devices; one or more data storage devices coupled to the one or more processing devices, the one or more data storage devices including instructions which, when executed by the one or more processing devices, cause the one or more processing devices to: extract a longest execution time from each of a plurality of blocks of execution timesto form an M set of execution times, each execution time corresponding to a length of time in which the application executes on the system; estimate distribution function parameters for the M set of execution times for each of a Gumbel, Fréchet, and Weibull extreme value theory (EVT) distribution functions; determine whether the M set of execution times fits any of the EVT distribution functions based on the distribution function parameters for the respective EVT distribution and at least one goodness of fit test; for each of the EVT distribution functions that fits the M set of execution times, calculate a minimum number of execution times to determine the WCET using the respective EVT distribution function based on the desired probability of exceedance; compare each minimum number of execution times with a number of execution times in the M set of execution times; and for each of the EVT distribution functions that fits the M set of execution times and in which the M set of execution times has at least as many execution times as the minimum number of execution times for the respective EVT distribution function, calculate a WCET for the M set of execution times to the desired probability of exceedance.

Example 15 includes the apparatus of Example 14, wherein the instructions cause the one or more processing devices to: verify whether the execution times in the plurality of blocks are identically distributed; and indicate that any WCET based on the plurality of blocks may be in error if the execution times in the plurality of blocks are not identically distributed.

Example 16 includes the apparatus of any of Examples 14-15, wherein the instructions cause the one or more processing devices to: verify whether the execution times in the plurality of blocks are sufficiently independent; and indicate that any WCET based on the plurality of blocks may be in error if the execution times in the plurality of blocks are not sufficiently independent.

Example 17 includes the apparatus of any of Examples 14-16, wherein estimate distribution function parameters includes apply a maximum likelihood method.

Example 18 includes the apparatus of any of Examples 14-17, wherein calculate a minimum number of execution times includes calculate the minimum number of execution times as a natural logarithm function of the desired probability of exceedance divided by a natural logarithm function of a result of the respective EVT distribution function of a longest execution time in the M set of execution times.

Example 19 includes a non-transitory processor readable medium including instructions which, when executed by one or more processing devices, cause the one or more processing devices to: extract a longest execution time from each of a plurality of blocks of execution timesto form an M set of execution times, each execution time corresponding to a length of time in which the application executes on the system; estimate distribution function parameters for the M set of execution times for each of a Gumbel, Fréchet, and Weibull extreme value theory (EVT) distribution functions; determine whether the M set of execution times fits any of the EVT distribution functions based on the distribution function parameters for the respective EVT distribution and at least one goodness of fit test; for each of the EVT distribution functions that fits the M set of execution times, calculate a minimum number of execution times to determine the WCET using the respective EVT distribution function based on the desired probability of exceedance; compare each minimum number of execution times with a number of execution times in the M set of execution times; and for each of the EVT distribution functions that fits the M set of execution times and in which the M set of execution times has at least as many execution times as the minimum number of execution times for the respective EVT distribution function, calculate a WCET for the M set of execution times to the desired probability of exceedance.

Example 20 includes the processor readable medium of Example 19, wherein the instructions cause the one or more processing devices to: verify whether the execution times in the plurality of blocks are identically distributed; verify whether the execution times in the plurality of blocks are sufficiently independent; and indicate that a WCET based on the plurality of blocks may be in error if the execution times in the plurality of blocks are not both identically distributed and sufficiently independent.

## Claims

1. A method (200) for determining a worst-case execution time (WCET) with a desired probability of exceedance for an application executed on a system, the method comprising:
extracting (204) a longest execution time from each of a plurality of blocks of execution timesto form an M set of execution times, each execution time corresponding to a length of time in which the application is executed on the system;
estimating (206) distribution function parameters for the M set of execution times for each of a Gumbel, Fréchet, and Weibull extreme value theory (EVT) distribution functions;
determining (206) whether the M set of execution times fits any of the EVT distribution functions based on the distribution function parameters for the respective EVT distribution and at least one goodness of fit test;
for each of the EVT distribution functions that fits the M set of execution times, calculating (208) a minimum number of execution times to determine the WCET using the respective EVT distribution function based on the desired probability of exceedance;
comparing (208) each minimum number of execution times with a number of execution times in the M set of execution times; and
for each of the EVT distribution functions that fits the M set of execution times and in which the M set of execution times has at least as many execution times as the minimum number of execution times for the respective EVT distribution function, calculating (210) a WCET for the M set of execution times to the desired probability of exceedance.

2. The method (200) of claim 1, comprising:
verifying (202) whether the execution times in the plurality of blocks are identically distributed; and
indicating that any WCET based on the plurality of blocks may be in error if the execution times in the plurality of blocks are not identically distributed.

3. The method of claim 2, wherein verifying (202) whether the execution times in the plurality of blocks are identically distributed includes:
creating a plurality of histograms for the plurality of blocks;
calculating a chi-squared statistic for the plurality of blocks;
calculating critical values for the plurality of blocks;
if the chi-squared statistic is less than or equal to each of the critical values, determining that the plurality of blocks are identically distributed; and
if the chi-squared statistic is greater than one or more of the critical values, determining that the plurality of blocks are not identically distributed.

4. The method of any of claims 1-3, comprising:
verifying (202) whether the execution times in the plurality of blocks are sufficiently independent; and
indicating that any WCET based on the plurality of blocks may be in error if the execution times in the plurality of blocks are not sufficiently independent.

5. The method of claim 4, wherein verifying (202) whether the execution times in the plurality of blocks are sufficiently independent includes:
applying an autocorrelation test to the execution times in the plurality of blocks;
if the autocorrelation test indicates that the execution times in the plurality of blocks have no dependencies, determining that the plurality of blocks are sufficiently independent;
if the autocorrelation test indicates that the execution times in the plurality of blocks have some dependencies, verifying whether the dependencies are boundable by the autocorrelation test and whether the execution times in the plurality of blocks are stationary;
if the dependencies are boundable and the execution times in the plurality of blocks are stationary, determining that the plurality of blocks are sufficiently independent; and
if the dependencies are not boundable or the execution times in the plurality of blocks are not stationary, determining that the plurality of blocks are not sufficiently independent.

6. The method of any of claims 1-5, wherein (206) estimating distribution function parameters includes applying a maximum likelihood method.

7. The method of any of claims 1-6, wherein the at least one goodness of fit test includes a Kolmogorov-Smirnov goodness of fit test and a chi-squared goodness of fit test with a significance level in the range of 0.01 to 0.10.

8. The method of any of claims 1-7, comprising:
if the M set of execution times does not fit any of the EVT distribution functions and a number of blocks in the plurality of blocks is greater than or equal to a threshold,
dividing the plurality of blocks into pairs of adjacent blocks;
merging the pairs of adjacent blocks to form an updated plurality of blocks; and
restarting the method with the updated plurality of blocks.

9. The method of any of claims 1-8, wherein calculating (208) a minimum number of execution times includes calculating the minimum number of execution times as a natural logarithm function of the desired probability of exceedance divided by a natural logarithm function of a result of the respective EVT distribution function of a longest execution time in the M set of execution times.

10. The method of any of claims 1-9, comprising:
if multiple WCET are calculated, selecting from the multiple WCET, a WCET having the longest time value as a WCET to output for the plurality of blocks.
